# EUROPÄISCHE PATENTSCHRIFT

(11) **EP 0 718 099 B1**
(45) Veröffentlichungstag und Bekanntmachung des Hinweises auf die Patenterteilung: **26.04.2000**
(21) Anmeldenummer: 95118673.3
(22) Anmeldetag: 28.11.1995
(51) Int. Cl.: B41F 19/06, B29C 59/04, B31F 1/07, B41F 19/02, B65H 20/10, B65H 23/04

(54) **Präge-Rotationsmaschine**
Rotary embossing machine
Machine rotative pour gaufrer

(30) Priorität: 24.12.1994 DE 9420707 U
(43) Veröffentlichungstag der Anmeldung: 26.06.1996
(73) Patentinhaber: Steuer, Armin, D-71111 Waldenbuch (DE)
(72) Erfinder: Steuer, Armin, D-71111 Waldenbuch (DE)
(74) Vertreter: Patentanwälte Ruff, Beier, Schöndorf und Mütschele

(56) Entgegenhaltungen:
- EP-A- 0 176 905
- EP-A- 0 415 881
- EP-A- 0 419 773
- EP-A- 0 425 926
- EP-A- 0 623 432
- DE-A- 3 509 329
- GB-A- 1 462 219
- GB-A- 2 198 265

## Beschreibung

Die Erfindung betrifft eine Präge-Rotationsmaschine nach dem Oberbegriff von Anspruch 1.

Bei gattungsgemäßen Präge-Rotationsmaschinen wird über einer zu beprägenden Materiallage, die mit konstanter Geschwindigkeit durch den Prägespalt geführt wird, eine Prägefolienbahn so mitbewegt, daß sie während eines Prägeintervalls mit gleicher Geschwindigkeit wie die Materiallage läuft. Dies ist erforderlich, damit das Prägegut, beispielsweise diskrete, hintereinanderliegende Prägeeinheiten wie Bilder oder Texte, oder aber ein aufzuprägender Teil einer Farbschicht, unverzerrt bzw. unverschmiert auf die zu beprägende Materiallage gelangen kann, und damit die Prägefolienbahn während des Prägeintervalls nicht reißt.

Bei Prägefolienbahnen mit diskreten Prägefolieneinheiten wird eine möglichst gute Registerhaltigkeit, also eine Lagegenauigkeit der Prägeeinheit zum vorgesehenen Prägeort, angestrebt. Bei Prägefolien mit Farbschichten dagegen strebt man zur Minimierung von Ausschuß mit nicht benutzten Farbschichtbereichen einen möglichst geringen Abstand nachfolgender, noch zu prägender Farbschichtbereiche von den vorhergehenden, bereits durch Prägung entfernten Farbschichtbereichen an.

Um Material zu sparen, wird angestrebt, daß hintereinanderliegende zu prägende Farbschichtbereiche und in der Regel auch hintereinanderliegende Prägeeinheiten auf der Prägefolienbahn enger zusammenliegen als hintereinanderliegende Prägeorte auf der Materiallage. Dies macht es erforderlich, daß die Prägefolienbahn außerhalb des Prägeintervalls langsamer als die Materiallage geführt wird, vor dem Prägeintervall auf die Materiallagengeschwindigkeit beschleunigt wird und anschließend wieder abgebremst und ggf. auch zurückgezogen wird. Diese Geschwindigkeitsänderungen werden durch Folienbeschleunigungsmittel bewirkt, wobei unter Folienbeschleunigung sowohl eine Geschwindigkeitssteigerung als auch eine Geschwindigkeitsverringerung, als auch eine Richtungsumkehr der Bewegung der Prägefolienbahn, verstanden wird.

Eine nach dem Heißprägeverfahren arbeitende Präge-Rotationsmaschine mit Vorschubgeschwindigkeitssteigerung und Vorschubgeschwindigkeitsabbremsung ist in der DE-OS 29 31 194 offenbart. Durch die insbesondere bei hohen Arbeitsgeschwindigkeiten erforderlichen hohen Beschleunigungen bzw. Verzögerungen kann die unter Umständen relativ zugempfindliche Prägefolienbahn starken Belastungen ausgesetzt sein, die zu Verzerrungen der Bahn bis zum Reißen und damit zur Verminderung der Prägequalität und zu Betriebsstörungen führen können. Zur Verlängerung der Beschleunigungswege und damit zur Absenkung des Beschleunigungsgrades und der Zugbelastung in Längsrichtung ist in der DE 37 13 666 A1 vorgeschlagen worden, die Prägefolienbahn vor jedem neuen Prägeintervall ein Stück zurückzuziehen, so daß eine längere "Anlaufstrecke" und auch eine längere "Abbremsstrecke" möglich wird.

Wie beispielsweise in der EP 0 415 881 A2 gezeigt, werden Vorwärts- und Rückwärtsbewegungen von gegen Längs Zugbeanspruchung relativ unempfindlichen Papierbahnen bereits zur Register- und Drucklängenkorrektur bei Druckmaschinen eingesetzt. Hinsichtlich Drehgeschwindigkeit und Drehrichtung steuerbare Führungswalzen vor und hinter dem Druckspalt sorgen mit über eine aufwendige Steuerung koordinierten, teilweise kurzzeitig gegeneinander versetzten Bewegungen für Papierbahnvorschub und -rückzug, wobei es kurzzeitig zu Bahnspannungsspitzen oder zum völligen Abfall der Bahnspannung kommen kann.

Die genannten, für Prägefolienbahnen typischen Gefahren des Verzerrens oder Reißens der Prägefolienbahn bei Beschleunigungsvorgängen könnten zwar durch Verlängerung der Beschleunigungswege in der beschriebenen Weise vermindert werden. Eine direkte Übernahme der für Papierbahnführung unter Umständen geeigneten Lösungen für empfindliche Prägefolien könnte aber, wenn überhaupt, nur bei erheblichem steuerungstechnischen Aufwand Erfolg versprechen. Folienstabilitätsprobleme können aber insbesondere bei dünneren Prägefolien auftreten, die empfindlicher gegen ggf. auch nur kurzfristige starke Längsbelastungen bei den Beschleunigungsvorgängen sind.

Der Erfindung liegt die Aufgabe zugrunde, Präge-Rotationsmaschinen der beschriebenen Art so fortzubilden, daß die angestrebte Registerhaltigkeit einerseits bzw. Ausschußverminderung andererseits verbessert wird, insbesondere auch bei auf mechanische Beanspruchung empfindlich reagierenden Folien, vor allem, wenn die beschriebenen Beschleunigungsvorgänge auf die Folie einwirken. Insbesondere soll auch die Gefahr des Reißens der Prägefolienbahn vermieden und die Prägequalität verbessert werden.

Zur Lösung dieser Aufgabe wird eine gattungsgemäße Präge-Rotationsmaschine vorgeschlagen, die dadurch gekennzeichnet ist, daß die Folientransportmittel (Folienbeschleunigungsmittel) eine dem Prägespalt nachgeschaltete Zugeinrichtung mit einem Schlupfantrieb für die Prägefolienbahn und eine mit der Zugeinrichtung zusammenwirkende, dem Prägespalt vorgeschaltete, steuerbare Folienzufuhreinrichtung aufweisen.

Es wird eine Kombination einer Zugeinrichtung mit Schlupfantrieb, der gesteuert sein kann, aber nicht gesteuert sein muß, mit einer steuerbaren Folienzufuhreinrichtung vorgeschlagen, die keinen Schlupf in Prägefolienbahnrichtung erlaubt und damit genau die Lage der Prägefolienbahn in Transportrichtung festlegen kann. Der Schlupfantrieb weist Elemente auf, die mit Wirkung in Zugrichtung an der Prägefolienbahn angreifen. Während bei herkömmlichen Zugeinrichtungen die Prägefolienbahn beispielsweise zwischen gegenläufigen, aufeinandergepreßten Zugrollen geführt wird, die die Prägefolienbahn einklemmen, arbeitet der Schlupfantrieb vorwiegend, vorzugsweise ausschließlich, im Bereich der Gleitreibung zwischen Prägefolienbahn und einem Zugelement. Während bei mit Kraftschluß arbeitenden Zugeinrichtungen, wie den die Prägefolienbahn einklemmenden Zugrollen, jede relative Geschwindigkeitsänderung zwischen Zugeinrichtung und Folienzufuhreinrichtung sich drastisch auf die Bahnspannung auswirkt, erlaubt ein Schlupfantrieb, der das Gleitreibungsprinzip ausnutzt, Änderungen dieser Geschwindigkeiten zueinander ohne wesentliche Änderungen der Bahnspannung. Die Bahnspannung kann im wesentlichen konstant gehalten werden; mindestens aber weist sie nur geringe Schwankungen und in keinem Fall Spannungspitzen oder einen völligen Abfall der Bahnspannung auf. Dadurch kann ein "Zerren" an der Bahn vermieden werden, was die Gefahr des Reißens der Prägefolienbahn vermindert. Im Bereich des Prägespaltes herrschten damit in einer bestimmten Größenordnung im wesentlichen konstante Spannungsverhältnisse, was wiederum die Prägequalität verbessert.

Da die Zugeinrichtung nicht an der Prägefolienbahn zerrt, hängt die Lagegenauigkeit des Prägegutes allein von der Steuergenauigkeit der Folienzufuhreinrichtung ab. Die Notwendigkeit einer steuertechnischen Verbindung zwischen Folienzufuhreinrichtung und Zugeinrichtung, wie sie beispielswiese bei Vorrichtungen mit gesteuerten Führungszylindern vor und hinter dem Prägespalt erforderlich ist, entfällt.

Bei einer erfindungsgemäßen Präge-Rotationsmaschine arbeitet im Vorlaufbetrieb die vorzugsweise ungesteuerte Zugeinrichtung als an der Prägefolienbahn ziehendes Element, während die Folienzufuhreinrichtung als regelbares Rückhalteelement dient, das Prägefolienbahn in genau kontrollierter Weise nachliefert. Im Rücklauf dagegen wirkt die Folienzufuhreinrichtung als gesteuertes Zugelement, während die Zugeinrichtung als vorzugsweise ungesteuertes Bremselement dient, das aufgrund des Schlupfantriebes die Prägefolienbahn immer unter etwa konstanter Bahnspannung hält. In beiden Fällen ist die Folienzufuhreinrichtung allein für die Lagegenauigkeit des Prägegutes relativ zur Materiallage verantwortlich. Dies ermöglicht in vorteilhafter Weise einerseits hohe Folienbeschleunigungen, die wiederum hohe Arbeitsgeschwindigkeiten der Vorrichtung ermöglichen, andererseits aber auch geringstmögliche Bahnspannungsschwankungen und gleichzeitig die Möglichkeit, die Längslage der Prägefolienbahn jederzeit exakt durch die Folienzufuhreinrichtung zu steuern. Damit kann bei Prägefolienbahnen mit diskreten Prägeeinheiten genaue Registerhaltigkeit und bei Prägefolienbahnen mit Farbschichten ein praktisch anschlußloser Ansatz nachfolgender zu prägender Farbschichtbereiche an vorhergehende, bereits geprägte erreicht werden, was der Abfallverminderung dient.

Der Schlupfantrieb kann mit Vorteil eine etwa in Transportrichtung der Prägefolienbahn bewegbare Antriebsfläche aufweisen, an der die Prägefolienbahn abschnittsweise unter Aufbau von Gleitreibung anpreßbar ist. Es können auch mehrere Antriebsflächen vorgesehen sein. Antriebsflächen können beispielsweise nach Art eines Walzenmantelabschnittes gekrümmt sein. Vorzugsweise ist eine Antriebsfläche abschnittsweise eben. Bei einer bevorzugten Ausführungsform ist der Schlupfantrieb als ein um parallelverschobene Rollen umlaufendes, mit jeweils einem Abschnitt seiner Außenfläche die Antriebsfläche bildendes Transportband ausgebildet. Auf diesem kann die Prägefolienbahn mit ihrer Rückseite aufliegen. Zur Erzeugung eines Andruckes der Prägefolienbahn an das Transportband im Bereich der Antriebsfläche können mit Vorteil Ansaugmittel vorgesehen sein, die zwischen Prägefolienbahn und Transportband einen Unterdruck erzeugen. Es ist auch denkbar, beispielsweise durch ein Gebläse über eine Luftströmung die Prägefolienbahn auf das Transportband zu drücken. Auch die Oberseite der Prägefolienbahn berührende Andruckmittel, beispielsweise Bürsten oder dergleichen, sind denkbar.

Wenn zum Andruck der Prägefolienbahn Ansaugmittel vorgesehen sind, können diese so ausgebildet sein, daß das Transportband Durchbrechungen aufweist und im Bereich der Antriebsfläche mindestens ein zur Innenfläche des Transportbandes mindestens teilweise geöffneter Unterdruckerzeuger vorgesehen ist. Dieser kann vorzugsweise als Unterdruckkasten mit einem Sauggebläse ausgebildet sein. Das Sauggebläse kann durch die Öffnungen des Unterdruckerzeugers und die Durchbrechungen des Transportbandes hindurch Luft ansaugen. In den Bereichen, in denen die Durchbrechungen durch die Prägefolienbahn abgedeckt sind, wird diese auf das Transportband gesogen.

Eine Steuerung der Stärke der Gleitreibung zwischen Prägefolienbahn und Antriebsfläche kann über die Vorschubgeschwindigkeit des Transportbandes und/oder über die Saugkraft des Unterdruckerzeugers erfolgen. Prinzipiell ist aber keine Steuerung notwendig und bei einer bevorzugten Ausführungsform auch nicht vorgesehen. Das Transportband kann direkt oder beispielsweise über einen Transmissionsriemen von einem Antriebsmotor angetrieben werden.

Die Folienzufuhreinrichtung kann mindestens eine in Abrollkontakt mit der Prägefolienbahn stehende, durch eine Steuereinrichtung in Drehgeschwindigkeit und/oder Drehrichtung steuerbare Steuerwalze aufweisen. Durch diese können Vorwärtsbewegungen, vorzugsweise aber sowohl Vorwärts- als auch Rückwärtsbewegungen der Prägefolienbahn mit variierenden Geschwindigkeiten ermöglicht werden. An der Steuerwalze kann die Prägefolienbahn beispielsweise tangential vorbeigeführt und unter Andruck an einen Gegendruckzylinder in ihrer Geschwindigkeit und ggf. Richtung gesteuert werden. Bei einer bevorzugten Ausführungsform weist die Folienzufuhreinrichtung nur eine einzige Steuerwalze auf. Diese kann von der Prägefolienbahn in einem Umfangsabschnitt umschlungen sein, so daß die Steuerwalze auch als Umlenkwalze dient. Mit Vorteil kann die Steuerwalze etwa entlang der Hälfte ihres Umfanges umschlungen sein. Eine Umschlingung kann sicheren Kontakt zwischen Steuerwalze und Prägefolienbahn ohne Verrutschen gewährleisten.

Die Prägefolienbahn kann auf die Steuerwalze beispielsweise durch eine weitere Walze aufgedrückt werden. Zu beachten ist bei einem mechanischen Andruck, wie er durch eine Gegenwalze erfolgen könnte, daß die empfindliche Oberseite der Prägefolie auf der Zufuhrseite der Transporteinrichtung, also vor dem Prägespalt, noch die Prägeeinheiten bzw. die Farbschicht trägt. Diese könnten durch einen mechanischen Andruck beschädigt werden. Bei einer bevorzugten Ausführugsform ist die Steuerwalze als Unterdruckwalze bzw. Saugwalze ausgebildet. Die Steuerwalze kann über einen in seiner Antriebsgeschwindigkeit und -richtung programmierbaren Antriebsmotor angetrieben sein. Über ein Folien-Bewegungsprogramm der Motorsteuerung können die beschriebenen Vorwärtsbewegungen, Beschleunigungen und ggf. die Rückwärtsbewegungen gesteuert werden.

Die durch die Folienbeschleunigungsmittel erzeugte ungleichmäßige Bewegung der Prägefolienbahn erfordert besondere Vorkehrungen bei der Zu- und Abfuhr der Prägefolienbahn. Die entsprechenden Vorrichtungen hierzu sollen möglichst nur geringen Steueraufwand erfordern und insbesondere auf der Zufuhrseite weder an der Prägefolienbahn zerren noch diese mechanisch belasten noch in anderer Weise, beispielsweise durch Zerkratzen oder dergleichen, beschädigen. Bei einer bevorzugten Ausführungsform weist die Transporteinrichtung eine Quelle für die Prägefolienbahn, vorzugsweise eine Abwickel-Speicherrolle und abfuhrseitig eine Aufnahme, vorzugsweise eine Aufwickel-Speicherrolle, für jeweils eine Prägefolienbahn sowie zwischen diesen Folienspeicher für die Aufnahme von Abschnitten der Prägefolienbahn auf. Zweckmäßig können ein oder mehrere Folienspeicher, bezogen auf den Verlauf der Prägefolienbahn, zwischen beispielsweise Abwickel-Speicherrolle und den Folienbeschleunigungsmitteln liegen. Auf der Abfuhrseite können ein oder mehrere Folienspeicher zwischen den Folienbeschleunigungsmitteln und der Aufnahmevorrichtung für die verbrauchte Prägefolienbahn liegen.

Vorzugsweise weisen die Folienspeicher genau einen der Folienzufuhreinrichtung vorgeschalteten, einen Schlaufenabschnitt der Prägefolienbahn aufnehmenden Folienzufuhrspeicher auf, der zweckmäßig als Unterdruckbehälter ausgebildet ist. Der Unterdruck kann dazu dienen, den Schlaufenabschnitt, der wegen der diskontinuierlichen Bewegung der Prägefolienbahn eine veränderliche Länge aufweist, in jeder Stellung vorzugsweise ohne Faltung der Prägefolienbahn unter leichter Spannung zu halten. Im Gegensatz zu den bekannten Tänzerwalzen, die beispielsweise bei Druckmaschinen für Papierbahnspannung in den Speicherbereichen sorgen können, kann die Führung im Unterdruckbehälter weitgehend ohne Berührung der Prägefolienbahn mit Führungselementen erfolgen. Bei einer bevorzugten Ausführungsform kann der Folienzufuhrspeicher als vorzugsweise langgestreckter, vorzugsweise nach unten stirnseitig mindestens eine Öffnung zur Aufnahme des Schlaufenabschnittes aufweisender Behälter ausgebildet sein, der zur Einsaugung des Schlaufenabschnittes mindestens einen Unterdruckerzeuger aufweist. Dieser kann in Form eines Sauggebläses ausgebildet sein, das der Aufnahmeseite gegenüber ebenfalls stirnseitig an dem Behälter angeordnet sein kann. Die Länge des Behälters kann so gewählt sein, daß sie die Länge des Schlaufenabschnittes auch bei maximaler Speicherfüllung übersteigt.

Der Folienzufuhrspeicher kann zweckmäßig mindestens einen zur Füllsignalübertragung mit einer Steuereinrichtung verbindbaren Füllgradsensor aufweisen. Mit Vorteil sind ein erster und ein zweiter Füllgradsensor vorgesehen, wobei der erste Füllgradsensor bei Erreichung des Füllgradmaximums und der zweite Füllgradsensor bei Erreichen des Füllgradminimums ein Signal an die Steuereinrichtung abgibt. Bei Erreichen des Füllgradmaximums kann über dieses Signal die Zufuhrgeschwindigkeit der Prägefolienbahn durch beispielsweise die Abwickel-Speicherrolle herabgesetzt werden, so daß die Folienbeschleunigungsmittel mehr Prägefolienbahn pro Zeiteinheit aus dem Speicher entnehmen als nachgeliefert wird. Wird das durch den zweiten Füllgradsensor detektierte Füllgradminimum erreicht, so kann die Steuereinrichtung die Zufuhrgeschwindigkeit erhöhen. Auf diese Weise bleibt immer "Spielraum" für die durch die Folienbeschleunigungsmittel erzeugte diskontinuierliche Fortbewegung der Prägefolienbahn.

Auch abfuhrseitig, also der Zugeinrichtung nachgeschaltet, kann ein entsprechender Folienspeicher vorgesehen sein. Da abfuhrseitig weniger hohe Ansprüche an möglichst geringe Beschädigung der Folienbahn gestellt sind, könnten auch herkömmliche Tänzerwalzen Verwendung finden. Bei einer bevorzugten Ausführung ist ein Folienspeicher vorgesehen, der ebenfalls als Unterdruckbehälter ausgebildet ist, wobei vorzugsweise der Folienabfuhrspeicher und der Folienzufuhrspeicher im wesentlichen gleich aufgebaut sind. Insbesondere kann auch der Folienabfuhrspeicher zwei Füllgradsensoren für Füllgradminimum und -maximum aufweisen. Auf diese Weise kann die durch den Folienabfuhrspeicher auf die Prägefolienbahn bewirkte Zugkraft so gering wie für eine faltungsfreie Führung der Prägefolienbahn nötig gehalten werden. Der Betrieb der Zugeinrichtung, insbesondere des Schlupfantriebes, wird auf diese Weise so gering wie möglich, beispielsweise durch Zerren an der Prägefolienbahn, beeinflußt.

Bei der Erfindung sind die Prägefolienbahn möglichst wenig mechanisch belastende und an dieser zerrende Mittel zur Folienzufuhr- und -abfuhr mit ebenfalls die Prägefolienbahn möglichst gering unter Bahnspannungsänderungen setzenden Folienbeschleunigungsmitteln vorteilhaft miteinander kombiniert. Durch die Vorrichtung ist dadurch eine verbesserte Prägequalität und Registerhaltigkeit und ein störungsärmerer Ablauf der Prägung insbesondere auch bei hohen Arbeitsgeschwindigkeiten und empfindlichen Prägefolien möglich. Sie ist insbesondere für die beschriebene Vor/Rückschritt-Arbeitsweise der Folie geeignet, erhöht aber auch bei Arbeitsweisen, bei denen die Folie im wesentlichen gleichförmig läuft, die Registergenauigkeit. Die erfindungsgemäße Ausbildung eignet sich insbesondere für Heißpräge-Rotationsmaschinen, bei denen der Prägezylinder für Heißprägefolienbahnen mindestens eine beheizbare Matrize aufweist.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ein Ausführungsbeispiel der Erfindung ist in der Zeichnung dargestellt. Es zeigt:

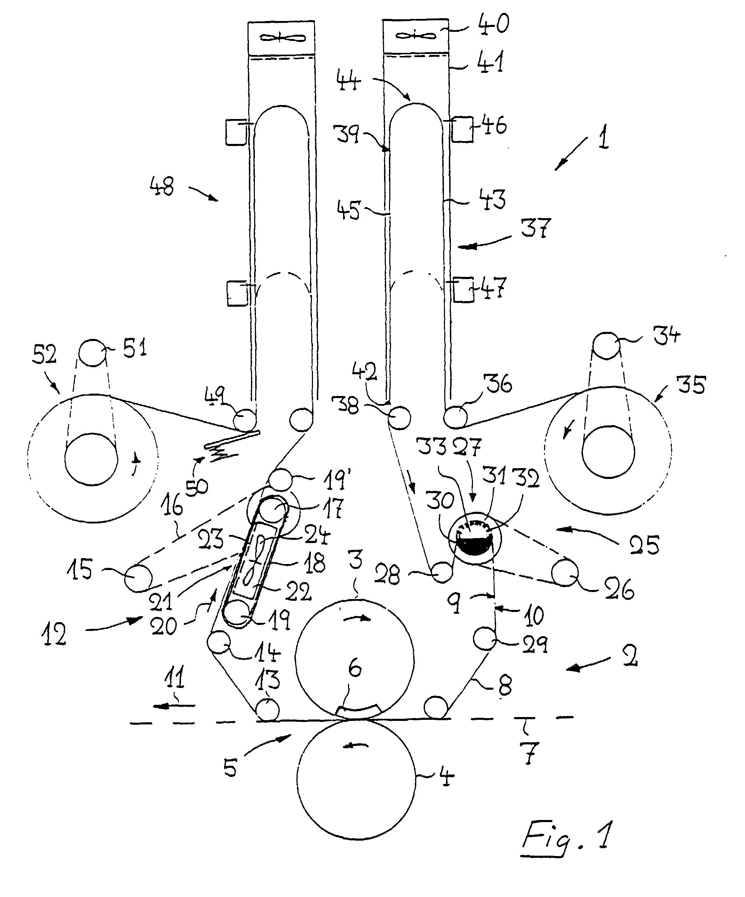

- Fig. 1: eine schematische Seitenansicht einer erfindungsgemäßen Präge-Rotationsmaschine.

Die Heißpräge-Rotationsmaschine 1 in Fig. 1 dient beispielsweise zum Beprägen von aufeinanderfolgenden Bogen oder einer Bahn aus Papier, Karton oder Kunststoff. Sie weist ein Prägewerk 2 mit einem horizontalen Prägezylinder 3 und einem etwa gleich großen, darunterliegenden Gegendruckzylinder 4 auf, zwischen denen ein Prägespalt 5 gebildet ist. Der Prägezylinder 3 weist entlang seines Umfangs mindestens eine beheizbare Prägematrize 6 auf, die in der Figur auf eine durchlaufende Materiallage 7 eine auf der Prägefolienbahn 8 angeordnete Prägeeinheit aufprägt. Die Prägefolienbahn 8 weist eine Rückseite 9 und eine empfindliche, den Heißkleber aufweisende Vorderseite 10 auf. Fig. 1 zeigt die Vorrichtung während eines Prägeintervalls, während dem die Materiallage 7 und die Prägefolienbahn 8 im Bereich des Prägespaltes 5 die gleiche Bewegungsrichtung 11 aufweisen und gleich schnell durch den Prägespalt 5 laufen.

In Transportrichtung dem Prägespalt 5 nachgeschaltet ist eine Zugeinrichtung 12 angeordnet, zu der die Prägefolienbahn über zwei Umlenkrollen 13, 14 geführt wird. Die Zugeinrichtung weist eine von einem Antriebsmotor 15 über einen Treibriemen 16 angetriebene Antriebsrolle 17 auf. Über die Antriebsrolle 17 wird ein Transportband 18, das um eine Umlenkrolle 19 herum verläuft, angetrieben. Die Antriebsrolle 17 und die Umlenkrolle 19 sind so achsparallel gegeneinander versetzt angeordnet, daß das Transportband 18 in seinem der Prägefolienbahn 8 zugewandten Bereich im wesentlichen parallel zur Prägefolienbahn 8 verläuft, die in diesem Bereich zwischen den Umlenkrollen 14 und 19' verläuft, deren relative Lage zueinander die Transportrichtung 20 in diesem Bereich bestimmt. Das Transportband 18 bildet zwischen den Rollen 17 und 19 auf der der Prägefolienbahn 8 zugewandten Seite jeweils eine im wesentlichen ebene und parallel zur Prägefolienbahn verlaufende, in Transportrichtung 20 bewegte Antriebsfläche 21.

Im Transportband 18 sind von seiner Außenseite zu seiner Innenseite durchgehende Durchbrechungen in einer solchen Breite vorgesehen, daß die Prägefolienbahn die Durchbrechungen bei Anliegen an das Transportband im Bereich der Antriebsfläche 21 je nach ihrer Breite teilweise oder vollständig abdeckt.

Zwischen den Rollen 17 und 19 ist zwischen den von diesen geführten Transportbandabschnitten ein als Saugkasten 22 ausgebildeter Unterdruckerzeuger angeordnet, der im Bereich der Antriebsfläche 21 parallel zu dieser eine durchbrochene Abdeckung 23 aufweist, durch die durch einen Ventilator 24 Luft in den Saugkasten angesaugt werden kann. Die durchbrochene Abdeckung 23 liegt so nahe an der Innenseite des Transportbandes 18 im Bereich der Antriebsfläche 21, daß die Ansaugung von Luft im wesentlichen durch die Durchbrechungen des Transportbandes erfolgt, wodurch eine aufliegende Prägefolienbahn auf die Antriebsfläche 21 gesogen und so an diese angedrückt wird.

Wenn die Bahngeschwindigkeiten des Transportbandes 18 und der Prägefolienbahn 8 in Transportrichtung 20 gleich sind, kann im Bereich der Antriebsfläche 21 Haftreibung zwischen Prägefolienbahn und Transportband aufgebaut werden. Unterscheiden sich die Bahngeschwindigkeiten etwa dadurch, daß das Transportband schneller in Transportrichtung 20 bewegt wird als die Prägefolienbahn, so entsteht zwischen Transportband und Prägefolienbahn Gleitreibung. Die Zugeinrichtung 12 arbeitet in diesem Fall als Schlupfantrieb, der die Prägefolienbahn 8 in Transportrichtung 20 zieht, ohne daß es bei entsprechenden gegen die Transportrichtung 20 wirkenden Gegenkräften zu einem Zerren an der Prägefolienbahn und damit zur Beschädigung derselben kommen kann. Die Zugeinrichtung arbeitet vorzugsweise ausschließlich als Schlupfantrieb, so daß an der Prägefolienbahn angreifende zusätzliche Kräfte beim Übergang zwischen Haft- und Gleitreibung vermieden werden.

Dem Prägespalt 5 vorgeschaltet ist eine die Folienzufuhr steuernde Folienzufuhreinrichtung 25 angeordnet. Ein bezüglich Drehrichtung und Drehgeschwindigkeit programmierbarer Antriebsmotor 26 treibt über einen Treibriemen eine dadurch in Drehgeschwindigkeit und/oder Drehrichtung steuerbare Steuerwalze 27 an, über die die Prägefolienbahn 8 über Umlenkrollen 28, 29 so geführt wird, daß die Steuerwalze 27 etwa auf der oberen Hälfte ihres Umfangs von der Prägefolienbahn 8 umschlungen ist. Steuerwalze 27 und Prägefolienbahn 8 stehen in Abrollkontakt. Die Steuerwalze ist als Unterdruckwalze bzw. Saugwalze ausgebildet. Sie weist einen feststehenden Walzenkern 30 auf, um den eine entlang ihres Umfanges mit durchgehenden Öffnungen 31 versehene Walzenhülse 32 rotiert. Der Walzenkern 30 ist in Form eines Zylindersektors ausgebildet und weist eine halbzylinderförmige, zum gedachten Rand des Zylinders geöffnete Ausnehmung 33 auf. Walzenkern und Walzenhülse sind so gegeneinander abgedichtet, daß der im Bereich der Randausnehmung gebildete Hohlraum nur im Bereich der an ihn angrenzenden Öffnungen 31 der Walzenhülse zur Abrollfläche der Saugwalze hin offen ist. In diesem Bereich ist die Saugwalze 27 umschlungen, und es wird erreicht, daß nur in dem von der Prägefolienbahn umschlungenen Bereich diese an die Walzenhülse 32 angesaugt werden kann.

Ein nicht gezeigter, mit dem Hohlraum verbundener Unterdruckerzeuger, beispielsweise ein Sauggebläse, sorgt dafür, daß Luft durch die Öffnungen 31 angesaugt werden kann, solange diese nicht abgedeckt sind. Umschlingt die Prägefolienbahn die Steuerwalze 27 so, daß die Öffnungen 31 teilweise, vorzugsweise vollständig abgedeckt sind, so wird der Kontakt in diesem Bereich durch Ansaugung der Prägefolienbahn verstärkt. Die Ausbildung der Steuerwalze 27 als Saugwalze hat den Vorteil, daß ein fester, für den Antrieb der Prägefolienbahn geeigneter und insbesondere gegen die Zugkraft der Zugeinrichtung ausreichender Haftkontakt zur Steuerwalze 27 hergestellt wird, ohne daß die empfindliche Vorderseite 10 der Prägefolienbahn 8 berührt wird. Damit ist die Gefahr von Beschädigungen der noch auf der Prägefolienbahn befindlichen Prägeeinheiten bzw. der Farbschicht vermieden. Ein Abrutschen der Prägefolienbahn von der Steuerwalze wird durch die Ansaugung und den dadurch erzeugten Haftkontakt vermieden. Dort, wo die Walzenhülse mit ihren Öffnungen 31 den Walzenkern 30 erreicht, wird der Unterdruck für die Prägefolienbahn aufgehoben, was ein leichtes Ablösen ermöglicht.

Die Folienzufuhr zur die Geschwindigkeit und die Bewegungsrichtung der Prägefolienbahn steuernden Saugwalze 27 erfolgt, ausgehend von einer durch einen Antriebsmotor 34 antreibbaren Abwickel-Speicherrolle 35, über eine Umlenkrolle 36 in den nach unten geöffneten langkastenförmigen Folienzufuhrspeicher 37. In diesem bildet die Prägefolienbahn 8 zwischen der Umlenkrolle 36 und einer weiteren Umlenkrolle 38 einen Schlaufenabschnitt 39, der durch ein Sauggebläse 40 in den Kasten 41 des Folienzufuhrspeichers 37 gesogen wird. Das Sauggebläse ist oben stirnseitig gegenüber der Eintrittsöffnung 42 des ansonsten geschlossenen Kastens 41 angeordnet und sorgt dafür, daß der Schlaufenabschnitt immer im aufgespannten Zustand ist, in dem die Prägefolienbahn 8 von der Umlenkrolle 36 über den Schlaufenschenkel 43 zum Scheitelbereich 44 und von dort über den Schlaufenschenkel 45 zur Umlenkrolle 38 verläuft. Der durch die Eintrittsöffnung 42 an den Schlaufenschenkeln vorbei gesogene Luftstrom sorgt dafür, daß die Rückseite 9 der Prägefolienbahn den Kasten 41 nicht berührt. Auch die empfindliche Vorderseite 10 der Prägefolienbahn hat nur an der Umlenkrolle 38 Berührungskontakt. Im gezeigten Beispiel ist der Folienzufuhrspeicher 37 bis zum durch den ersten Füllgradsensor 46 angezeigten Füllgradmaximum gefüllt. Bei Erreichen des durch den zweiten Füllgradsensors 47 angezeigten Füllgradminimums verläuft die Prägefolienbahn entlang der gestrichelten Linie innerhalb des Kastens 41.

Auf der Abfuhrseite ist der Zugeinrichtung nachgeschaltet ein Folienabfuhrspeicher 48 spiegelsymmetrisch zum Folienzufuhrspeicher 37 angeordnet. Die Füllgradsensoren liegen wie bei dem Folienzufuhrspeicher an der leicht zugänglichen Außenseite des Speichers. Auf der Folienaustrittsseite des Folienabfuhrspeichers ist eine die Prägefolienbahn gegen eine Umlenkrolle 49 drückende Folienbremse 50 angeordnet, die dafür sorgt, daß die Prägefolienbahn nicht durch die von einem Antriebsmotor 51 angetriebene Aufwickel-Speicherrolle 52 unzulässig stark aus dem Folienabfuhrspeicher 48 herausgezogen wird.

Vor Anlauf der Rotationsmaschine wird eine neue Abwickel-Speicherrolle eingesetzt und dann um die Umlenkrollen 36 und 38 so herumgewickelt, daß ein Schlaufenabschnitt in den Folienzufuhrspeicher hineingesogen wird. Der Unterdruck ermöglicht eine erleichterte Speicherfüllung, und die Prägefolienbahn kann dadurch leicht unter Spannung gehalten werden, was das weitere Einfädeln durch die Folienzufuhreinrichtung 25, den Prägespalt 5 und über die Zugeinrichtung 12 hinweg in den Folienabfuhrspeicher erleichtert. Hier kann der Schlaufenabschnitt der Prägefolienbahn ebenfalls eingesogen und dann durch den Bereich der Folienbremse 50 auf die Aufwickelrolle 52 geführt werden.

Nach Einfädeln der Prägefolienbahn und der Materiallage 7 kann der Prägevorgang beginnen. Dabei arbeitet die Vorrichtung nach folgenden Verfahren. Die Zugeinrichtung 12 wird mit konstanter Antriebsgeschwindigkeit so betrieben, daß die Bahngeschwindigkeit des Transportbandes geringfügig größer als die maximale Bahngeschwindigkeit der Prägefolienbahn ist, wie sie bei den beschriebenen Beschleunigungsvorgängen vor dem Prägen auftreten kann. Durch den durch den Ventilator 24 erzeugten Unterdruck zwischen Prägefolienbahn und Antriebsfläche 21 des Transportbandes wird die Prägefolienbahn ständig an die in Transportrichtung 20 bewegte Antriebsfläche 21 gesogen und unter Spannung gehalten, wobei durch den Schlupf zwischen Prägefolienbahn und Transportband Bahnspannungsspitzen oder ein völliger Abfall der Bahnspannung vermieden werden.

Die Geschwindigkeit der Prägefolienbahn im Prägespalt, und ggf. auch die Bewegungsrichtung, wird durch die Steuerwalze 27 kontrolliert, die durch den Programmvorschub einer nicht gezeigten Steuereinrichtung gesteuert wird. Die Abwickelgeschwindigkeit von der Abwickel-Speicherrolle entspricht, genau wie die Aufwickelgeschwindigkeit der Aufwickel-Speicherrolle, etwa der mittleren Vorschubgeschwindigkeit der Prägefolienbahn im Prägespalt 5.

Vor dem Prägeintervall wird die Prägefolien-Bahngeschwindigkeit durch Abbremsen der Steuerwalze 27 im Vergleich zur mittleren Bahngeschwindigkeit verlangsamt. Dadurch nimmt der Füllgrad des Folienzufuhrspeichers 37 etwas zu. Die Zugeinrichtung 12 ist in diesem Stadium im Schlupfbetrieb mit größerem Geschwindigkeitsunterschied zwischen Prägefolienbahn und Antriebsfläche. Bei Annäherung einer Prägematrize an den Prägespalt beschleunigt die Steuereinrichtung die Steuerwalze so, daß durch die Zugeinrichtung 12 lage- und zeitgenau eine Prägeeinheit in dem Bereich der den Prägespalt erreichenden Prägematrize gezogen wird. Die Geschwindigkeit der Prägefolienbahn ergibt sich dadurch, daß die die Steuerwalze umschlingende Prägefolienbahn auf dieser durch Unterdruck haftet und daher nur genau mit der Umfangsgeschwindigkeit und - richtung der Steuerwalze sich bewegen kann. Währenddessen wird durch die Zugeinrichtung 12 mit Schlupfantrieb eine im wesentlichen geschwindigkeitsunabhängige Zugkraft auf die Prägefolienbahn ausgeübt, wodurch die Bahnspannung im wesentlichen konstant, jedenfalls aber nur leicht und ohne Belastungsspitzen schwankend bleibt. Während des Prägeintervalls sind die Umfangsgeschwindigkeiten der Steuerwalze 27, des Prägezylinders 3 und des Gegendruckzylinders 4, sowie die Bahngeschwindigkeiten der Prägefolienbahn 8 und der Materiallage 7 im wesentlichen gleich. Die Bahngeschwindigkeit des Transportbandes übersteigt diese Geschwindigkeit vorzugsweise ein wenig, so daß es vorzugsweise nicht zur Ausbildung von Haftreibung zwischen Prägefolienbahn und Transportband kommt.

Nach Durchlauf der Prägematrize durch den Bereich des Prägespaltes, mit dem der Prägevorgang beendet ist, wird die Bahngeschwindigkeit der Prägefolienbahn durch Abbremsen der Steuerwalze 27 unter die mittlere Vorschubgeschwindigkeit der Prägefolienbahn gesenkt; ggf. wird die Prägefolienbahn 8 durch Zurückdrehung der Steuerwalze ein Stück zurückgezogen werden, um für den nächsten Prägevorgang einen längeren Anlaufweg für die Beschleunigung zu ermöglichen. In diesem Stadium wirkt die Zugeinrichtung als ungesteuerte Rückhalteeinrichtung, während die Steuerwalze als gesteuerte Zugvorrichtung gegen die von der Zugeinrichtung im wesentlichen konstant gehaltene Bahnspannung wirkt.

In den Phasen, in denen die tatsächliche Bahngeschwindigkeit der Prägefolienbahn die mittlere Vorschubgeschwindigkeit übersteigt, verringert sich der Füllgrad des Folienzufuhrspeichers 37, während sich der Füllgrad des Folienabfuhrspeichers 48 vergrößert. Bei tatsächlichen Vorschubgeschwindigkeiten unterhalb der mittleren Vorschubgeschwindigkeit, und insbesondere bei Zurückbewegung der Prägefolienbahn, sind die Verhältnisse umgekehrt. Durch die vorteilhafte Ausbildung der Folienspeicher als Unterdruckspeicher oder Saugspeicher wird der Bereich der Folienbeschleunigungsmittel 25, 12 und des Prägewerkes 2 hinsichtlich der auf die Prägefolienbahn ausgeübten Zugkräfte weitgehend von der übrigen Folienbahnzufuhr- und -abfuhr entkoppelt. Die geringen in Bahnrichtung wirkenden Kräfte, die durch die Folienspeicher auf die Prägefolienbahn bewirkt werden, sorgen im Bereich der Zufuhr zur Folienzufuhreinrichtung und im Bereich der Abfuhr hinter der Zugeinrichtung für nur geringe Kräfte entlang der Bahn, so daß die Folienbeschleunigungsmittel annähernd "freie Enden" der Folienbahn "sehen". Diese geringen äußeren Kräfte außerhalb der Folienbeschleunigungsmittel tragen mit zur möglichst konstanten Bahnspannung bzw. den nur geringen Bahnspannungsschwankungen der Prägefolienbahn bei. Auch dadurch können Betriebsstörungen, wie sie beispielsweise durch Riß einer Folie entstehen können, vermieden werden. Außerdem können die Folienbeschleunigungsmittel die Lage der Folie zu jedem Zeitpunkt so genau steuern, daß verbesserte Registerhaltigkeit bei Prägeeinheiten bzw. praktisch ansatzloses Ansetzen zu prägender Farbschichtbereiche erreicht werden kann.

Die Füllgradsensoren an den Folienspeichern unterstützen diese Wirkung, indem beispielsweise bei Erreichen des Füllgradminimums der zweite Füllgradsensor 47 an die Steuereinrichtung ein Signal aussendet, worauf diese die Abrollgeschwindigkeit der Abwickel-Speicherrolle 35 erhöht, so daß das Füllgradminimum nicht unterschritten wird. Umgekehrt führt ein Signal des ersten Füllgradsensors 46 über die Steuereinrichtung zu einer Verlangsamung der Drehgeschwindigkeit der Abwickel-Speicherrolle. Sinngemäßes gilt für das Zusammenspiel der Steuereinrichtung mit den Füllgradsensoren des Folienabfuhrspeichers und der Abwickel-Speicherrolle.

## Patentansprüche

1. Präge-Rotationsmaschine mit einem Prägewerk (2), bei dem zwischen einem Prägezylinder (3) und einem Gegendruckzylinder (4) ein Prägespalt (5) gebildet ist, und mit einer Transporteinrichtung zum Transport einer Prägefolienbahn (8) durch den Prägespalt, wobei die Transporteinrichtung Folientransportmittel (12, 27) für die Erzeugung eines während eines Prägeintervalls geschwindigkeitsgleichen Mitlaufes der Prägefolienbahn mit einer zu beprägenden Materiallage (7) aufweist, dadurch gekennzeichnet, daß die Folientransportmittel eine dem Prägespalt (5) nachgeschaltete Zugeinrichtung (12) mit einem Schlupfantrieb für die Prägefolienbahn und eine mit der Zugeinrichtung zusammenwirkende, dem Prägespalt vorgeschaltete, steuerbare Folienzufuhreinrichtung (25) aufweisen.

2. Präge-Rotationsmaschine nach Anspruch 1, dadurch gekennzeichnet, daß die Folientransportmittel zur Erzeugung eines ungleichmäßigen Mitlaufs ausgebildet sind und insbesondere als Folienbeschleunigungsmittel zum Vor/Rückschritt-Betrieb ausgebildet sind.

3. Präge-Rotationsmaschine nach Anspruch 1 oder 2, dadurch gekennzeichnet, daß der Schlupfantrieb eine in Transportrichtung (20) bewegbare, vorzugsweise abschnittsweise ebene Antriebsfläche (21) aufweist, an die die Prägefolienbahn (8) abschnittsweise unter Aufbau von Gleitreibung anpreßbar ist.

4. Präge-Rotationsmaschine nach einem der vorhergehenden Ansprüche, dadurch gekennzeichnet, daß der Schlupfantrieb ein umlaufendes, mit jeweils einem Abschnitt seiner Außenfläche die Antriebsfläche (21) bildendes Transportband (18) sowie vorzugsweise als Ansaugmittel ausgebildete Mittel zur Erzeugung eines Andruckes der Prägefolienbahn an das Transportband im Bereich der Antriebsfläche aufweist.

5. Präge-Rotationsmaschine nach Anspruch 4, dadurch gekennzeichnet, daß das Transportband (18) Durchbrechungen aufweist und im Bereich der Antriebsfläche (21) mindestens ein zur Innenfläche des Transportbandes mindestens teilweise geöffneter, vorzugsweise ein Sauggebläse aufweisender, Unterdruckerzeuger (22) vorgesehen ist.

6. Präge-Rotationsmaschine nach einem der vorhergehenden Ansprüche, dadurch gekennzeichnet, daß die Folienzufuhreinrichtung (25) mindestens eine in Abrollkontakt mit der Prägefolienbahn (8) stehende, durch eine Steuereinrichtung in Drehgeschwindigkeit und/oder Drehrichtung steuerbare Steuerwalze (27) aufweist.

7. Präge-Rotationsmaschine nach einem der vorhergehenden Ansprüche, dadurch gekennzeichnet, daß die Folienzufuhreinrichtung (25) eine einzige Steuerwalze (27) aufweist, die von der Prägefolienbahn (8) in einem Umfangsabschnitt, vorzugsweise etwa entlang der Hälfte ihres Umfanges, umschlungen ist.

8. Präge-Rotationsmaschine nach Anspruch 7, dadurch gekennzeichnet, daß die Steuerwalze (27) als Unterdruckwalze ausgebildet ist, vorzugsweise mit einem feststehenden, eine Randausnehmung (33) aufweisenden Walzenkern (30) und einer um den Walzenkern rotierenden, entlang ihres Umfanges mit durchgehenden Öffnungen (31) versehenen Walzenhülse (32), wobei ein zwischen Walzenkern und Walzenhülse im Bereich der Randausnehmung (33) gebildeter Hohlraum mit einem Unterdruckerzeuger verbunden ist und der Hohlraum im Bereich des von der Prägefolienbahn umschlungenen Umfangsabschnitts liegt.

9. Präge-Rotationsmaschine nach einem der vorhergehenden Ansprüche, dadurch gekennzeichnet, daß die Transporteinrichtung eine Abwickel-Speicherrolle (35) und eine Aufwickel-Speicherrolle (52) für die Prägefolienbahn sowie zwischen diesen Folienspeicher (37, 48) für die Aufnahme von Abschnitten der Prägefolienbahn aufweist.

10. Präge-Rotationsmaschine nach Anspruch 9, dadurch gekennzeichnet, daß die Folienspeicher (37, 48) einen der Folienzufuhreinrichtung (25) vorgeschalteten, einen Schlaufenabschnitt (39) der Prägefolienbahn (8) aufnehmenden Folienzufuhrspeicher (37) umfassen, der als Unterdruckbehälter ausgebildet ist.

11. Präge-Rotationsmaschine nach Anspruch 10, dadurch gekennzeichnet, daß der Folienzufuhrspeicher (37) als vorzugsweise senkrechter, langgestreckter, vorzugsweise an seiner unteren Stirnseite mindestens eine Öffnung (42) zur Aufnahme des Schlaufenabschnitts aufweisender Behälter (41) ausgebildet ist, der zur Einsaugung des Schlaufenabschnittes mindestens einen Unterdruckerzeuger aufweist, vorzugsweise in Form eines Sauggebläses (40).

12. Präge-Rotationsmaschine nach einem der Ansprüche 10 oder 11, dadurch gekennzeichnet, daß der Folienzufuhrspeicher (37) mindestens einen zur Füllungssignalübertragung mit einer Steuereinrichtung verbindbaren Füllgradsensor aufweist.

13. Präge-Rotationsmaschine nach einem der Ansprüche 10 bis 12, dadurch gekennzeichnet, daß der Folienzufuhrspeicher (37) einen ersten und einen zweiten Füllgradsensor aufweist, wobei der erste Füllgradsensor (46) bei Erreichung des Füllgradmaximums und der zweite Füllgradsensor (47) bei Erreichen des Füllgradminimums ein Signal abgibt.

14. Präge-Rotationsmaschine nach einem der Ansprüche 9 bis 13, dadurch gekennzeichnet, daß die Folienspeicher einen der Zugeinrichtung (12) nachgeschalteten, einen Schlaufenabschnitt der verbrauchten Prägefolienbahn (8) aufnehmenden Folienabfuhrspeicher (48) umfassen, der vorzugsweise als Unterdruckbehälter ausgebildet ist.

15. Präge-Rotationsmaschine nach Anspruch 14, dadurch gekennzeichnet, daß der Folienabfuhrspeicher und der Folienzufuhrspeicher im wesentlichen gleich aufgebaut sind.

## Claims

1. Rotary embossing machine with an embossing mechanism (2), in which an embossing gap (5) is formed between an embossing cylinder (3) and an impression cylinder (4), and with a conveying mechanism for conveying an embossing foil web (8) through the embossing gap, the conveying mechanism having foil conveying means (12, 27) for producing a speed-identical running of the embossing foil web with a material layer (7) to be embossed during an embossing interval, characterized in that the foil conveying means have a pull device (12) following the embossing gap (5) and having a slip drive for the embossing foil web and a controllable foil supply device (25) upstream of the embossing gap and cooperating with the pull device.

2. Rotary embossing machine according to claim 1, characterized in that the foil conveying means are constructed for producing a non-uniform running and in particular as foil accelerating means for forward/reverse operation.

3. Rotary embossing machine according to claim 1 or 2, characterized in that the slip drive has a driving face (21) movable in the conveying direction (20) and which is preferably zonally flat and onto which the embossing foil web (8) can be zonally pressed, whilst building up sliding friction.

4. Rotary embossing machine according to one of the preceding claims, characterized in that the slip drive has a revolving conveyor belt (18) forming with in each case one portion of its outer surface the driving face (21) and a means, preferably constructed as a suction means, for producing a pressing action of the embossing foil web onto the conveyor belt in the vicinity of the driving face.

5. Rotary embossing machine according to claim 4, characterized in that the conveyor belt (18) has openings and in the vicinity of the driving face (21) at least one vacuum generator (22), preferably having a suction fan and which is at least partly open towards the inner face of the conveyor belt.

6. Rotary embossing machine according to one of the preceding claims, characterized in that the foil supply device (25) has at least one control roller (27) in rolling contact with the embossing foil web (8) and whose rotation speed and/or direction can be controlled by a controlling device.

7. Rotary embossing machine according to one of the preceding claims, characterized in that the foil supply device (25) has a single control roller (27), which is looped by the embossing foil web (8) in a circumferential portion, preferably along roughly half its circumference.

8. Rotary embossing machine according to claim 7, characterized in that the control roller (27) is constructed as a vacuum roller, preferably with a fixed roller core (30) having a marginal recess (33) and a roller sleeve (32) rotating round the roller core and provided along its circumference with through openings (31) and a cavity formed between the roller core and the roller sleeve in the vicinity of the marginal recess (33) is connected to a vacuum generator and the cavity is located in the vicinity of the circumferential portion looped by the embossing foil web.

9. Rotary embossing machine according to one of the preceding claims, characterized in that the conveying mechanism has an unwinding storage reel (35) and a winding storage reel (52) for the embossing foil web, as well as between them foil accumulators (37, 48) for receiving embossing foil web portions.

10. Rotary embossing machine according to claim 9, characterized in that the foil accumulators (37, 48) comprise a foil supply accumulator (37) located upstream of the foil supply device (25) and receiving a loop portion (39) of the embossing foil web (8) and which is constructed as a vacuum container.

11. Rotary embossing machine according to claim 10, characterized in that the foil supply accumulator (37) is constructed as a container (41) which is preferably vertical, elongated and has on a lower front face at least one opening (42) for receiving the loop portion and which for sucking in the latter has at least one vacuum generator, preferably in the form of a suction fan (40).

12. Rotary embossing machine according to one of the claims 10 or 11, characterized in that the foil supply accumulator (37) has at least one fill level sensor connectable for fill signal transmission to a control device.

13. Rotary embossing machine according to one of the claims 10 to 12, characterized in that the foil supply accumulator (37) has a first and a second fill level sensor, the first fill level sensor (46) emitting a signal on reaching the fill level maximum and the second fill level sensor (47) emitting a signal on reaching the fill level minimum.

14. Rotary embossing machine according to one of the claims 9 to 13, characterized in that the foil accumulators comprise a foil removal accumulator (48) following the pull device (12) and receiving a loop portion of the spent embossing foil web (8) and which is preferably constructed as a vacuum container.

15. Rotary embossing machine according to claim 14, characterized in that the foil removal accumulator and the foil supply accumulator are substantially identically constructed.

## Revendications

1. Machine rotative à gaufrer avec un outil de gaufrage (2) où une fente de gaufrage (5) est constituée entre un cylindre de gaufrage (3) et un contre-cylindre (4) et avec un dispositif de transport pour le transport d'une bande de feuille de gaufrage (8) par la fente de gaufrage, le dispositif de transport présentant des moyens de transport de feuille (12, 27) pour la génération d'un entraînement de la bande de feuille de gaufrage de vitesse identique pendant l'intervalle de gaufrage avec une couche de matière de gaufrage (7), caractérisé en ce que les moyens de transport de feuille présentent un dispositif de traction (12) placé en aval de la fente de gaufrage (5) avec un entraînement à glissement pour la bande de feuille de gaufrage et un dispositif d'amenée de feuille (25) pouvant être commandé, placé en amont de la fente de gaufrage et coopérant avec le dispositif de traction.

2. Machine rotative à gaufrer selon la revendication 1, caractérisée en ce que les moyens de transport de feuille servent à réaliser un entraînement commun irrégulier et font office en particulier de moyens d'accélération de feuille avec mouvement d'avance et de recul.

3. Machine rotative à gaufrer selon la revendication 1 ou 2, caractérisée en ce que l'entraînement à glissement présente une surface d'entraînement (21) plane de préférence par section et mobile dans le sens de transport (20), surface contre laquelle la bande de feuille de gaufrage (8) peut être compressée par section sous la friction par glissement.

4. Machine rotative selon l'une des revendications précédentes, caractérisée en ce que l'entraînement à glissement présente un tapis circulaire de transport (18) formant avec une section respective de sa surface externe la surface d'entraînement(21) ainsi que des moyens faisant office de préférence de moyens d'aspiration pour la réalisation d'une pression d'application de la bande de feuille de gaufrage contre le tapis de transport dans la zone de la surface d'entraînement.

5. Machine rotative à gaufrer selon la revendication 4, caractérisée en ce que le tapis de transport (18) présente des percées et dans la zone de la surface d'entraînement (21), il est prévu au moins un générateur de dépression (22) ouvert au moins partiellement en direction de la surface interne du tapis de transport et présentant de préférence un ventilateur aspirant.

6. Machine rotative selon l'une des revendications précédentes, caractérisée en ce que le dispositif d'amenée de feuille (25) présente au moins un rouleau de commande (27) se trouvant en contact de roulement avec la bande de feuille de gaufrage (8) et pouvant être commandé par un dispositif de commande en vitesse et/ou en sens de rotation.

7. Machine rotative selon l'une des revendications précédentes, caractérisée en ce que le dispositif d'amenée de feuille (25) présente un rouleau de commande unique (27) qui est entouré dans une section de périphérie par la bande de feuille de gaufrage (8) de préférence sensiblement le long de la moitié de sa périphérie.

8. Machine rotative à gaufrer selon la revendication 7, caractérisée en ce que le rouleau de commande (27) est conçu comme un rouleau de dépression de préférence avec un noyau de rouleau fixe (30) présentant un évidemment marginal (33) et une gaine de rouleau (32) munie le long de sa périphérie d'orifices continus (31) et tournant autour du noyau de rouleau, une cavité formée entre le noyau de rouleau et la gaine de rouleau dans la zone de l'évidemment marginal (33) étant reliée à un générateur de dépression et la cavité se trouvant dans la zone de la section de périphérie entourée par la bande de feuille de gaufrage.

9. Machine rotative selon l'une des revendications précédentes, caractérisée en ce que le dispositif de transport présente un rouleau de réserve dérouleur (35) et un rouleau de réserve enrouleur (52) pour la bande de feuille de gaufrage ainsi qu'entre ces rouleaux de réserve (37, 48) pour la réception de sections de la bande de feuille de gaufrage.

10. Machine rotative à gaufrer selon la revendication 9, caractérisée en ce que les rouleaux de réserve (37, 48) comprennent une réserve d'amenée de feuille (37) placée avant le dispositif d'amenée de feuille (25) et recevant une section en boucle (39) de la bande de feuille de gaufrage (8) et qui sert de réservoir de dépression.

11. Machine rotative à gaufrer selon la revendication 10, caractérisée en ce que la réserve d'amenée de feuille (37) fait office de préférence de réservoir (41) de préférence vertical et allongé, présentant de préférence sur sa face avant inférieure au moins une ouverture (42) pour le logement de la section en boucle et qui présente pour l'aspiration de la section en boucle au moins un générateur de dépression de préférence sous forme d'un ventilateur aspirant (40).

12. Machine rotative à gaufrer selon l'une des revendications 10 ou 11, caractérisée en ce que la réserve d'amenée de feuille (37) présente au moins une sonde de niveau de remplissage pouvant être reliée au dispositif de commande pour la transmission de signaux de remplissage.

13. Machine rotative à gaufrer selon l'une des revendications 10 à 12, caractérisée en ce que la réserve d'amenée de feuille (37) présente une première et une seconde sonde de niveau de remplissage, la première sonde de remplissage (46) délivrant un signal quand le niveau maximal de remplissage est atteint et la seconde sonde de niveau de remplissage (47) émettant également un signal quand le niveau minimal de remplissage est atteint.

14. Machine rotative à gaufrer selon l'une des revendications 9 à 13, caractérisée en ce que les réserves de feuille comprennent une réserve de sortie de feuille (48) placée après le dispositif de traction (12) et recevant une section en boucle de la bande de feuille de gaufrage (8) consommée, cette réserve faisant office de préférence de réservoir de dépression.

15. Machine rotative à gaufrer selon la revendication 14, caractérisée en ce que la réserve de sorite de feuille et la réserve d'amenée de feuille sont de configuration sensiblement identique.
